Europäisches Patentamt

European Patent Office

Office européen des brevets

(19)

(11) **EP 1 637 345 A1**

(12) **DEMANDE DE BREVET EUROPEEN**
publiée en application de l'article 158, paragraphe 3 de la CBE

(43) Date de publication:
**22.03.2006 Bulletin 2006/12**

(51) Int Cl.:
**B42D 15/00** (1968.09)       **G06F 3/03** (1980.01)

(21) Numéro de dépôt: **04746730.3**

(22) Date de dépôt: **24.06.2004**

(86) Numéro de dépôt international:
**PCT/JP2004/009261**

(87) Numéro de publication internationale:
**WO 2004/113093 (29.12.2004 Gazette 2004/53)**

(84) Etats contractants désignés:
**FR**

(30) Priorité: **24.06.2003 JP 2003180197**
**11.08.2003 JP 2003291345**

(71) Demandeur: **HITACHI MAXELL, LTD.**
**Ibaraki-shi,**
**Osaka 567-8567 (JP)**

(72) Inventeurs:
• **ABE, Hiroshi**
**Ibaraki-shi,**
**Osaka 5678567 (JP)**
• **MIYATA, Kazushi**
**Ibaraki-shi,**
**Osaka 5678567 (JP)**

• **TAKEUCHI, Takashi**
**Ibaraki-shi,**
**Osaka 5678567 (JP)**
• **UEHARA, Motoshi**
**Ibaraki-shi,**
**Osaka 5678567 (JP)**
• **KODERA, Yuji**
**Ibaraki-shi,**
**Osaka 5678567 (JP)**
• **YAMAZAKI, Ikuo**
**Oyamazaki-cho Otokuni-gun,**
**Kyoto 6180071 (JP)**

(74) Mandataire: **Intes, Didier Gérard André et al**
**Cabinet Beau de Loménie,**
**158, rue de l'Université**
**75340 Paris Cedex 07 (FR)**

(54) **SUPPORT D'ECRITURE POUR SYSTEME DE SAISIE A MAIN LEVEE**

(57)     L'invention a pour but de fournir un support d'écriture qui est utilisé pour un système de saisie des informations manuscrites, dans lequel les points sont peu apparents et dans lequel l'unité de saisie des informations manuscrites peut lire d'une manière précise la marque de détection. Un autre but de l'invention est de fournir un système de saisie des informations manuscrites doté d'un support d'écriture et d'une unité de saisie des informations manuscrites, dans lequel le support d'écriture est muni d'une marque de détection qui est peu apparente et avec laquelle ladite unité de saisie fait moins d'erreurs de lecture. Le support d'écriture selon l'invention a des points de petite dimension qui sont imprimés sur la surface d'un substrat sous forme de feuilles, lesdits points contenant un colorant ou pigment qui absorbe le rayonnement infrarouge. Il est prévu que la différence de couleur $\Delta E^*_{ab}(p\text{-}p)$ est inférieure ou égale à 60 sous la lumière visible de 380 à 780nm. Cette différence de couleur $\Delta E^*_{ab}(p\text{-}p)$ est calculée par la valeur de mesure du modèle colorimétrique L*a*b*.

Fig. 1

**Description**

Domaine technique de l'invention

La présente invention se rapporte à un support d'écriture pour un système de saisie des informations manuscrites qui permet de convertir les formes ou figures manuscrites en informations numériques pour leur enregistrement, au moyen d'une unité de saisie des informations manuscrites qui sert à transférer des caractères manuscrits ou analogues vers un ordinateur etc.

Etat de la technique

Dans ces dernières années, un système de saisie des informations manuscrites pour convertir les formes ou figures manuscrites en données numériques pour leur enregistrement est mis au point. A titre d'exemple, la demande publiée de brevet japonais tokuhyo n°2003-500778 décrit un système doté d'une feuille sur la surface de laquelle une marque de détection qui consiste en un nombre infini de points est imprimée, et d'une unité de saisie des informations manuscrites sous forme d'un stylo qui permet de lire ladite marque de détection. Cette marque de détection se compose de points qui sont arrangés selon une loi définie, et on peut obtenir les informations sur les positions absolues en analysant la loi d'arrangement de cette marque de détection. L'unité de saisie des informations manuscrites est munie d'une source lumineuse pour la lecture, d'un capteur pour obtenir l'image à deux dimensions de la marque de détection, et d'un processeur qui détermine la position du stylo en analysant la marque de détection obtenue. Pour utiliser l'unité de saisie des informations manuscrites, il suffit de la déplacer sur la feuille de manière à écrire à la main. Le capteur de l'unité de saisie des informations manuscrites enregistre, à intervalle de temps défini, la marque de détection qui varie avec le déplacement de cette unité, et le processeur analyse plusieurs marques de détection qui sont enregistrés, pour lier leurs données d'analyse l'une à l'autre. C'est ainsi que les données numériques concernant la trajectoire du déplacement de l'unité de saisie des informations manuscrites sont obtenues. Par ailleurs, en équipant l'unité de saisie des informations manuscrites d'un stylo qui remplit une fonction réelle d' écriture, on obtient à la fois le document dans lequel l'écriture est effectuée et les informations numérique de son contenu.

La demande publiée de brevet japonais tokuhyo n°2003-503905 décrit également un système pour convertir des figures dessinées sur ladite feuille en informations numériques par l'unité de saisie des informations manuscrites. Dans ce système, l'unité de saisie des informations manuscrites lit aussi une marque de détection située autour des figures lors de la lecture de ces figures. En analysant les données sur les figures ainsi que la marque de détection située dans la position correspondante du dessin, on peut convertir la forme des figures et leur position du dessin en données numériques. Selon ce procédé, on lit une figure en la divisant en plusieurs parties et aquérit plusieurs données partielles de cette figure, puis en liant ces données de figure l'une par rapport à l'autre au moyen d'un processeur, on obtient les données numériques de la figure originale.

La demande publiée de brevet japonais tokuhyo n°2003-508831 décrit un système correspondant à la structure telle qu'un tableau blanc dans lequel l'écriture et l'effacement se répètent. Dans un mode de réalisation de ce document, le système comprend une feuille plastique sur laquelle des marques de détection sont imprimées, et deux sortes d' unité de lecture de ces marques de détection. Ils sont utilisés en les adaptant à l'ensemble du tableau blanc existant. La feuille plastique est également montée sur le tableau blanc existant, et l'unité de saisie des informations manuscrites est montée sur le stylo ainsi que sur un moyen d'effacement. Dans ce système, en associant le contenu écrit et enregistré par le stylo, au contenu qu'on a effacé par le moyen d'effacement, la donnée qui est écrite chaque fois peut être séparée en tant que donnée écrite sur une autre feuille.

La demande publiée de brevet japonais tokuhyo n°2003-500777 décrit un exemple d'application du système dudit document n°2003-500778. En cochant, avec un stylo muni d'une unité de saisie des informations manuscrites, une case d'un bon de commande sur lequel une marque de détection est imprimée, ladite marque de détection cochée dans cette case est lue par l'unité de saisie des informations manuscrites. A partir de ces données qui sont lues, on peut établir les informations numériques concernant les données des articles commandés.

Ces systèmes de saisie des informations manuscrites permettent non seulement de produire les formes ou figures manuscrites en temps réel, mais aussi de les lire après l'écriture. Avantageusement, ces systèmes peuvent transférer les données numériques sur les formes ou figures manuscrites vers l'unité extérieure sans fil, de sorte que le cablage n'est pas nécessaire, et ils peuvent s'adapter d'une manière flexible à divers styles d'utilisation.

Dans ces systèmes de saisie des informations manuscrites, il est demandé de lire avec précision la marque de détection imprimée sur le support d'écriture réservé à cette fonction. Ainsi, les points sont imprimés sur la feuille teintée blanche au moyen de l'encre teintée noire telle que l'encre noire ou bleue foncée, et, en outre, il est prévu que les points ont une dimension plus grande.

Une encre teintée noire a une différence de couleur plus élevée par rapport à la couleur de la surface de feuilles, l'utilisateur trouve alors que les points sont trop apparents et il éprouve une sensation de gêne. De plus, une feuille sur laquelle de nombreux points sont imprimés a une couleur grise et son aspect est moins esthétique. Par ailleurs, lorsque la marque de détection est imprimée soit sur des feuilles au motif délicat tel qu'un tableau de paysage, comme par exemple sur un chèque, un chèque de voyage, ou un titre, pour la prévention de la contrefaçon, soit sur des feuilles au motif de la décoration minutieuse, comme par exemple un ensemble de cartes ou de lettres, d'une part, elle risque de dégrader sensiblement l'aspect ou l'esthétique, et d'autre part, le système peut prendre les motifs pour la marque de détection, ce qui peut rendre imprécise la lecture de la marque de détection.

De plus, dans le cas de points de grande dimension, l'utilisateur éprouve non seulement un manque d'harmonie, mais aussi de la difficulté à percevoir visuellement le contenu inscrit, car les caractères écrits sur la feuille sont superposés au points imprimés.

Exposé de l'invention

A cet effet, la présente invention a pour but de fournir un support d' écriture pour un système de saisie des informations manuscrites, dans lequel les points sont peu apparents, et qui permet à l'unité de saisie des informations manuscrites de lire avec précision la marque de détection.

Un autre but de l'invention est un système de saisie des informations manuscrites comportant un support d'écriture et une unité de saisie des informations manuscrites, dans lequel le support d'écriture est doté d'une marque de détection qui est peu apparente et avec laquelle ladite unité de saisie fait moins d'erreurs de lecture.

Le support d'écriture selon l'invention comprend un substrat sous forme de feuilles, sur la surface duquel des points en petite taille sous forme définie sont imprimés, lesdits points contenant un colorant ou un pigment qui absorbe le rayonnement infrarouge. La différence de couleur $\Delta E^*_{ab}$(p-p) entre la partie imprimée (les points) et la zone non-imprimée (le fond du substrat) est inférieure ou égale à 60 sous la lumière visible de 380 à 780nm. Cette différence de couleur $\Delta E^*_{ab}$(p-p) est calculée en utilisant la relation 1 ci-dessous à partir de la valeur de mesure du modèle colorimétrique La*b* ,

$$\Delta E^*_{ab}(p-p) = \sqrt{(\Delta L^*(p-p))^2 + (\Delta a^*(p-p))^2 + (\Delta b^*(p-p))^2} \cdots (1)$$

$\Delta E^*_{ab}$(p-p) étant une différence de couleur entre la partie imprimée et la zone non-imprimée, $\Delta L^*_{ab}$ (p-p) étant une différence de luminance L* entre la partie imprimée et la zone non-imprimée, $\Delta a^*_{ab}$ (p-p) étant une différence de chromaticité a* entre la partie imprimée et la partie non-imprimée, et $\Delta b^*_{ab}$ (p-p) étant une différence de chromaticité b* entre la partie imprimée et la partie non-imprimée. La différence de couleur $\Delta E^*_{ab}$(p-p) est convenable pour estimer la différence de couleur qui est perçue visuellement, et plus cette différence $\Delta E^*_{ab}$(p-p) est grande, plus on perçoit la différence de couleur.

Ainsi, grâce au support d'écriture selon l'invention dont la différence de couleur $\Delta E^*_{ab}$(p-p) entre la partie imprimée( les points ) et la zone non-imprimée(le fond du substrat) est inférieure ou égale à 60, les points sont visuellement moins apparents par rapport aux points classiques teintés noirs, ce qui a pour effet de réduire l'influence sur l'aspect de feuilles.

Lorsque la différence de couleur $\Delta E^*_{ab}$(p-p) dépasse 60 entre la partie imprimée et la zone non-imprimée, la présence des points de la partie imprimée devient assez apparente, l'utilisateur hésite à écrire des lettres, ce qui n'est pas favorable. Lorsque la différence de couleur $\Delta E^*_{ab}$(p-p) est inférieure ou égale à 60, les points formés en encre gênent moins l'utilisateur, donc celui-ci éprouve moins de manque d'harmonie.

De plus, lorsque la différence de couleur $\Delta E^*_{ab}$(p-p) entre la partie imprimée et la zone non-imprimée est inférieure ou égale à 40, les points ne pouvant guère être perçus visuellement, l'utilisateur n'éprouve guère de sensation de gêne, ce qui est favorable. Par ailleurs, lorsque la différence de couleur $\Delta E^*_{ab}$(p-p) entre la partie imprimée et la zone non-imprimée est inférieure ou égale à 20, les points ne pouvant plus être perçus visuellement, l'utilisateur ne reconnaît plus la présence des points 12, et il peut ainsi avantageusement se servir de cette feuille de la même façon que des feuilles traditionnelles. La plage de la différence de couleur $\Delta E^*_{ab}$(p-p) la plus souhaitable est compris entre 10 et 20.

Selon l'invention, afin de définir l'étendue de la différence de couleur $\Delta E^*_{ab}$(p-p) préférable, cette différence de couleur $\Delta E^*_{ab}$(p-p) entre la partie imprimée et la zone non-imprimée est préalablement corrélée avec la sensation de gêne que l'utilisateur éprouve au regard du support d'écriture où les points sont imprimés effectivement. Par conséquent, il est avantageux que le choix de la couleur de l'encre pour l'impression des points ainsi que la décision si cette couleur convient ou non, soient déterminés d'une manière mécanique quel que soit le jugement subjectif que l'utilisateur peut porter sur eux.

Etant donné que les points comprennent un colorant ou un pigment qui absorbe le rayonnement infrarouge, lors de l'irradiation sur le support d'écriture, la capacité d'absorption de ce rayonnement est largement différente entre les points imprimés et la zone non-imprimée, il s'ensuit que le rapport signal sur bruit est suffisamment élevé dans une région du rayonnement infrarouge. Grace à cela, avec un capteur pour la prise de vue des images de réflexion dans cette gamme de longueur d'onde, il est possible de lire la marque de détection avec précision.

Selon l'invention, on entend par points, ceux qui sont imprimés d'une manière éparpillée sur la feuille. Ils peuvent prendre diverses formes précises vus en zoom, telles que un cercle, un ovale, un polygone, ou des formes qui consistent en une croix (x) , un tiret ou une barre oblique (slash "/"), ou des formes consistant en leur combinaison.

Selon l'invention, on entend par l'unité de saisie des informations manuscrites, une unité générale de saisie qui convertit en informations numériques, les caractères, textes, ou formes écrits à la main sur le support d'écriture, afin de les saisir dans l'appareil externe. Cette unité comprend au moins un poste de caméra qui a pour fonction de lire une marque de détection imprimée sur la surface dudit support d'écriture, un processeur qui analyse l'arrangement de la marque de détection, et un poste de communication qui a pour fonction de transférer les données. L'unité de saisie des informations manuscrites peut prendre plusieurs formes par l'ajout d'autres fonctions. A titre d'exemple, il y a une unité de saisie du type stylo avec une fonction de stylo permettant l'inscription des caractères, et une unité de saisie du type attachement qui peut être utilisé en l'adaptant au stylo existant.

Description sommaire des dessins

La figure 1 est une vue de face schématique qui illustre un support d'écriture pour un système de saisie des informations manuscrites selon un mode de réalisation de l'invention.

La figure 2 est une vue de face schématique qui illustre un support d'écriture pour un système de saisie des informations manuscrites selon un autre mode de réalisation de l'invention.

La figure 3 est une vue schématique qui illustre l'intérieur de l'unité de saisie des informations manuscrites selon un mode de réalisation de l'invention.

Description d'exemples de réalisation

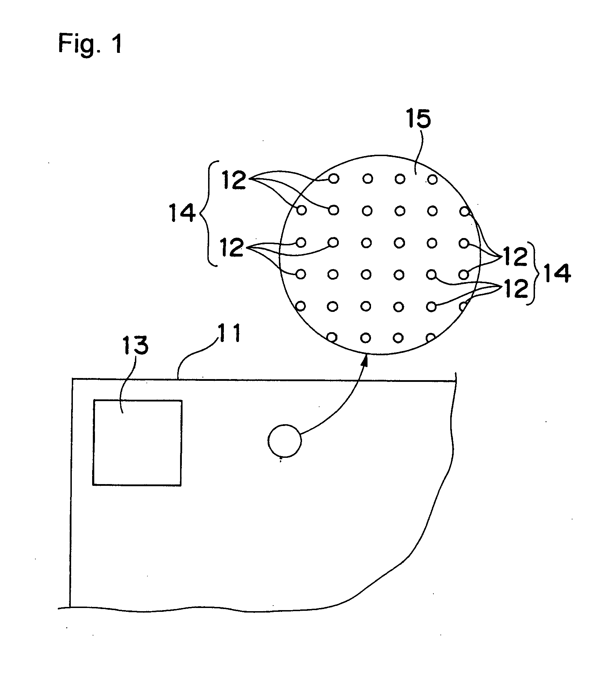

Le support d'écriture 11 selon l'invention comprend un substrat sous forme de feuilles sur la surface duquel plusieurs points 12 sont imprimés comme cela est illustré sur la figure 1. Ces points 12 sont arrangés selon une loi spécifique pour former une marque de détection 14. Les points 12 contiennent un colorant ou pigment qui absorbe le rayonnement infrarouge, et la différence de couleur $\Delta E^*_{ab}(p\text{-}p)$ entre la partie des points 12 et la surface de la zone non-imprimée 15 est dans une plage inférieure ou égale à 60 sous la lumière visible de 380 à 780nm.

La différence de couleur $\Delta E^*_{ab}(p\text{-}p)$ est calculée avec la luminance L* et la chromaticité a*, b* selon le modèle colorimétrique L*a*b* (JIS Z 8729). Le modèle colorimétrique L*a*b* est un des procédés pour exprimer les couleurs d'objets, qui est utilisé pour repérer d'une manière quantitative la couleur. La luminance L* est exprimée avec des valeurs 0 à 100, le blanc étant plus fort en allant à 100, et le noir étant plus fort en allant à 0. La chromaticité a* est la gamme de couleur allant du vert au rouge, le rouge étant plus fort si la valeur avance dans un sens positif, et le vert étant plus fort si la valeur avance dans un sens négatif. La chromaticité b* est la gamme de couleur du bleu au jaune, le jaune étant plus fort si la valeur avance dans un sens positif, et le bleu étant plus fort si la valeur avance dans un sens négatif. A titre indicatif, une teinte verte jaunâtre est obtenue à la chromaticité a*=-20 et b*=20, une teinte violette à la chromaticité a*=20 et b*=-20, et une teinte bleue verte à la chromaticité a*=-20 et b*=-20. La modèle colorimétrique La*b* correspond également aux modèle LEB de la CIE (Comission Internationale de l'Eclairage).

La différence de couleur:

$\Delta E^*_{ab}(p\text{-}p) = \sqrt{(\Delta L^*(p-p))^2 + (\Delta a^*(p-p))^2 + (\Delta b^*(p-p))^2}$ est calculée de façon que les deux couleurs sont repérées dans le système de coordonnées de l'espace colorimétrique pour calculer la distance entre ces deux points. La différence de couleur $\Delta E^*_{ab}(p\text{-}p)$ est considéré comme sensiblement correspondante à la différence de couleur que l'on perçoit visuellement. De ce fait, lorsque la différence de couleur $\Delta E^*_{ab}(p\text{-}p)$ entre les points 12 et la zone non-imprimée 15 est ainsi représentée en chiffre en utilisant le modèle colorimétrique L*a*b*, la sensation de gêne que l'utilisateur éprouve par la présence des points 12 sur le support d'écriture peut être défini d'une manière quantitative, bien que ladite sensation de gêne dépende subjectivement de l'utilisateur.

Lorsque la différence de couleur $\Delta E^*_{ab}(p\text{-}p)$ dépasse 60, les points sont trop apparents pour que l'utilisateur n'hésite pas à s'en servir en tant que support d'écriture, ce qui n'est pas convenable. La différence de couleur $\Delta E^*_{ab}(p\text{-}p)$ inférieure ou égale à 60 permet à l'utilisateur d'éprouver moins de difficulté lors de l'usage du support, celle inférieure ou égale à 40 lui permet d'utiliser le support sans la sensation de gêne, et celle comprise entre 20 et 0 lui permet de s'en servir agréablement sans percevoir la présence même de l'impression des points. Si on définit la différence de couleur idéale en se référant à la perception visuelle de l'utilisateur, la valeur optimale est $\Delta E^*_{ab}(p\text{-}p)=0$. Au cas où un colorant ou un pigment sans couleur qui absorbe le rayonnement infrarouge serait utilisé, il est possible que la différence de couleur ait la valeur 0. Toutefois, la couleur des points 12 dépend en général de la couleur du pigment qui absorbe le rayonnement infrarouge, et il a été montré à l'évidence que, avec la différence de couleur $\Delta E^*_{ab}(p\text{-}p)$ inférieure ou égale à 10, le colorant ou pigment des points 12 qui absorbe le rayonnement infrarouge a une densité trop faible. Par conséquent, il est préférable que les points 12 qui sont utilisés en pratique aient une différence de couleur $\Delta E^*_{ab}(p\text{-}p)$ comprise dans la plage entre 10 et 20.

Ces points 12 sont imprimés en utilisant l'encre contenant un colorant ou un pigment qui absorbe le rayonnement infrarouge, c'est à dire, l'encre contenant un colorant et/ou un pigment doté d'une capacité d'absorption du rayonnement infrarouge. Quand la lumière infrarouge est irradiée sur le support d'écriture 11, cette lumière est presque complètement absorbée par les points 12, tandis que la totalité ou une partie de cette lumière est réfléchie par la zone non-imprimée 15. Ainsi, lors de l'enregistrement des prises de vue, sous forme d'image, du rayonnement infrarouge sur la surface du support d'écriture 11, les points 12 apparaissent noirs car ils absorbent le rayonnement infrarouge, alors que dans les autres parties non-imprimées 15, ils apparaissent clairs en réfléchissant ce rayonnement.

Une marque de détection 14 qui détecte les points 12 est calculée de manière à déterminer sa position dans un sens. Par exemple, on peut savoir sa position absolue sur la feuille à partir de la petite matrice ou le petit arrangement des points 12 de 5 points de côté (5×5 points) (Voir les demandes publiées de brevet japonais Tokuhyo n°2003-500777 et n°2003-500778).

Si on évalue par le signal contraste de l'impression (PCS), la différence du taux de réflexion du rayonnement infrarouge entre les points 12 et la zone non-imprimée 15, ou PCS est de préférence comprise entre 0.5 et 1 lors de l'irradiation du proche infrarouge de 800 à 1000nm. Ici, le PCS est défini par la formule (2) ci-dessous:

$$\text{PCS} = (\text{taux de réflexion de la zone non-imprimée} - \text{taux de réflexion des points})/(\text{taux de réflexion de la zone non-imprimée}) \cdots (2)$$

Comme le montre cette formule 2, le PCS est une valeur normalisée qui est obtenue en divisant la différence de taux de réflexion entre la zone non-imprimée et les points, par le taux de réflexion de la zone non-imprimée, dont la valeur maximum est 1. Plus cette valeur s'approche de 1, plus grande est la différence de taux de réflexion entre la zone non-imprimée 15 et les points 12, si bien que l'unité de saisie des informations manucrites 1 est capable de détecter les points 12 avec une haute sensibilité. D'autre part, plus la valeur du PCS s'approche de 0, plus petite est la différence de taux de réflexion entre la zone non-imprimée 15 et les points 12, si bien que l'unité de saisie des informations manuscrites 1 risque de commettre une erreur de lecture des points 12.

Dans l'unité de saisie des inscriptions manuscrites, utilisée d'une manière ordinaire, la longueur d'onde maximum de la source lumière 9 est environ 800 à 1000nm. Dans cette étendue de la longueur d'onde, l'élément d'enregistrement des prises de vue de l'infrarouge sous forme d'image 10 détecte les points 12 avec une haute sensibilité. Il est donc utile de définir le PCS dans une telle longueur d'onde. Lorsque le taux d'absorption des points 12 est de 100% (PCS=1) dans cette longueur d'onde, on peut obtenir un rapport élevé signal sur bruit, ce qui est idéal.

Pourtant, en réalité, il n'arrive guère que ce taux d'absorption des points 12 soit de 100% (PCS=1), il est donc préférable que le PCS soit compris dans la plage de 0.5 à 1. Lorsque le PCS est inférieur à 0.5, l'élément d'enregistrement des prises de vue sous forme d'images 10 a de la difficulté à identifier suffisamment les points 12, et une erreur de lecture est possible, ce qui n'est pas souhaitable.

En principe, la différence de couleur $\Delta E^*_{ab}(p\text{-}p)$ n'est pas liée directement au PCS. Cependant, étant donné que le colorant ou le pigment qui absorbe le rayonnement infrarouge est en général coloré(e), la différence de couleur a tendance à augmenter, quand le PCS s'accroît avec l'augmentation de la teneur en colorant ou pigment. En cas de colorant qui absorbe le rayonnement infrarouge qui est utilisé ordinairement, il se révèle qu'avec une différence de couleur $\Delta E^*_{ab}(p\text{-}p)$ supérieure à 10, une valeur préférable du PCS est obtenue.

Le taux de réflexion de l'infrarouge de la zone non-imprimée 15 est élevé lorsque le substrat du support d'écriture 11 a une teinte blanchâtre ou blanc jaunâtre telle que blanc, crème, blanc cassé, ou ivoire, ce qui fait augmenter d'une manière avantageuse le rapport signal sur bruit des points 12.

En ce qui concerne les points 12, on peut utiliser quelque couleur que ce soit, et notamment il est avantageux d'utiliser de l'encre contenant un colorant ou pigment blanc, jaune, ou vert, car ces couleurs peuvent conférer à l'utilisateur une bonne perception visuelle et réduire le manque d'harmonie lors de l'utilisation.

Avantageusement, les points 12 sont colorés de façon que la différence de couleur $\Delta E^*_{ab}(p\text{-}b)$ entre ces points et la partie d'écriture du stylo soit supérieure ou égale à 50. Il sera préférable que la différence de couleur $\Delta E^*_{ab}(p\text{-}b)$

soit supérieure ou égale à 60. La différence de couleur $\Delta E^*_{ab}(p\text{-}b)$ entre les points et la partie d'écriture du stylo est calculée, à partir de la valeur du mesure du modèle colorimétrique L*a*b*, en utilisant la formule 3 ci-dessous,

$$\Delta E^{*}_{ab}(p-b) = \sqrt{(\Delta L^{*}(p-b))^{2} + (\Delta a^{*}(p-b))^{2} + (\Delta b^{*}(p-b))^{2}} \quad \cdots (3)$$

dans lequel $\Delta L^*_{ab}(p\text{-}b)$ est une différence de luminance L* entre les points et la partie d'écriture du stylo, $\Delta a^*_{ab}(p\text{-}b)$ étant une différence de chromaticité a* entre les points et la partie d'écriture du stylo, et $\Delta b^*_{ab}(p\text{-}b)$ étant une différence de chromaticité b* entre les points et la partie d'écriture du stylo. Cette différence de couleur $\Delta E^*_{ab}(p\text{-}b)$ est convenable pour évaluer la différence de la couleur perçue visuellement, et plus cette différence $\Delta E^*_{ab}(p\text{-}b)$ est grande, plus la perception visuelle de la couleur est distincte.

Avec la différence de couleur $\Delta E^*_{ab}(p\text{-}b)$ inférieure ou égale à 50 entre les points et la partie d'écriture du stylo, il arrive que ces points 12 et les caractères écrits ne soient pas distigués d'une manière exacte, ce qui est défavorable. Par contre, avec la différence de couleur $\Delta E^*_{ab}(p\text{-}b)$ supérieure ou égale à 50, et de préférence à 60, entre les points 12 et la partie d'écriture du stylo, les caractères écrits par le stylo sont mis en relief, permettant une perception visuelle plus nette.

Le colorant ou pigment qui absorbe le rayonnement infrarouge qu'on peut utiliser est un complexe organométallique, comme celui de phtalo, cyanine, phtalo-cyanine, et naphtalo-cyanine. L'encre comportant ces colorants ou pigments est munie d'une bonne capacité d'absorption du rayonnement infrarouge et permet d'obtenir un rapport signal sur bruit suffisant même si l'impression est faite avec de l'encre diluée. Par conséquent, la dose d'utilisation du colorant ou pigment qui absorbe l'infrarouge peut être diminuée, ce qui est avantageux pour réduire le coût de fabrication du support d'écriture 11. En plus, même si ce support d'écriture 11 est plus ou moins sali, la sensibilité de détection est avantageusement maintenue d'une manière adéquate par l'unite de saisie des informations manuscrites. En ce qui concerne la quantité de déchets qui sont détachés de l'encre adhérée à la pointe du stylo, le colorant a moins de déchets par rapport au pigment, et la pointe du stylo a moins de risque d'être bouchée avec le colorant.

La densité convenable du pigment ou colorant qui absorbe l'infrarouge contenu dans l'encre réservée à l'impression des points 12, est différente selon la nature du pigment ou colorant utilisé, mais de préférence, elle est en général comprise dans la plage de 0.1 à 10 % en poids. Lorsque cette densité est inférieure à 0.1 % en poids, il sera difficile d'avoir un rapport signal sur bruit suffisant car l'encre est trop diluée. Plus la densité du pigment ou colorant augmente, plus le rapport signal sur bruit est élevé, mais ce rapport sera saturé et ne changera plus au-delà d'une densité de 10 % en poids.

En conséquence, il n'est pas souhaitable d'avoir une densité de plus de 10% en poids, car la différence de couleur ainsi que le coût de l'encre augmentent.

En tant que méthode de fabrication des points 12, on peut par exemple citer divers procédés tels que l'impression en offset, l'impression sérigraphie, et l'impression jet d'encre.

Le substrat est formé par un papier qualité, un papier recyclé, ou un film de haut poids moléculaire. Le papier qualité et le papier recyclé sont appropriés pour fabriquer un cahier, un papier réglé, une carte, un bloc note ainsi que d'autres papiers. Le film de haut poids moléculaire est approprié par exemple comme tableau blanc électronique, en appliquant ce film sur la surface du tableau blanc existant. Le film de haut poids moléculaire peut être composé de chlorure de polyvynil, polyéthylène téréphtalate, et caoutchouc silicone.

Pour mesurer la luminance L* et la chromaticité a*, b* des points 12, il sera préférable de former une zone d'aplat 13. En général, la dimension des points 12 est environ $100\,\mu$m, de sorte que si l'on essaye de mesurer la teinte de points 12 aussi petits, cette mesure concerne en réalité la zone non-imprimée 15 dans laquelle les points 12 sont imprimés. Dans ce cas, on forme une zone d'aplat 13 sur la même épaisseur que celle de l'encre des points 12 en utilisant la même encre que celle utlisée pour l'impression des points 12, afin de mesurer la luminance ainsi que la chromaticité de ces points 12. Cette zone d'aplat 13 a une dimension telle que l'on peut mesurer avec un chromamètre. La zone d'aplat 13 est essentiellement utilisée pour définir la luminance ainsi que la chromaticité des points 12, afin de déterminer la teinte et l'épaisseur de l'encre des points 12. Ainsi, il n'est pas nécessaire de former la zone d'aplat 13 dans l'étape de fabrication du support d'écriture 11.

Les points 12 sont arrangés sous forme de marques de détection 14 en vue de représenter leur position sur le support d'écriture 11. Plus précisément, comme le montre la figure 1, la marque de détection 14 dans laquelle nombreux points 12 indépendants sont disposés est formée et dispersée dans l'étendue sur la surface du substrat susceptible d'écriture. La marque de détection 14 est arrangée selon la loi préalablement définie, et leur position (les coordonnées) sur le support d'écriture 11 est déterminée à partir de la position relative de plusieurs points 12.

En tant que marque de détection 14 des points 12, on peut citer par exemple ce qu'on appelle la trame (pattern) Anoto selon le standard de la société suédoise Anoto. Cette marque de détection permet de détecter non seulement les informations concernant la position sur le support d'écriture 11, mais aussi celles concernant les pages des papiers, en utilisant une unité de saisie des informations manuscrites. Sur la figure 1, les points 12 qui constituent la marque de détection 14 sont disposés d'une manière matricielle, ce qui représente le pattern Anoto schématiquement. Cependant, en réalité, la marque de détection peut être plus ou moins différente de ce pattern.

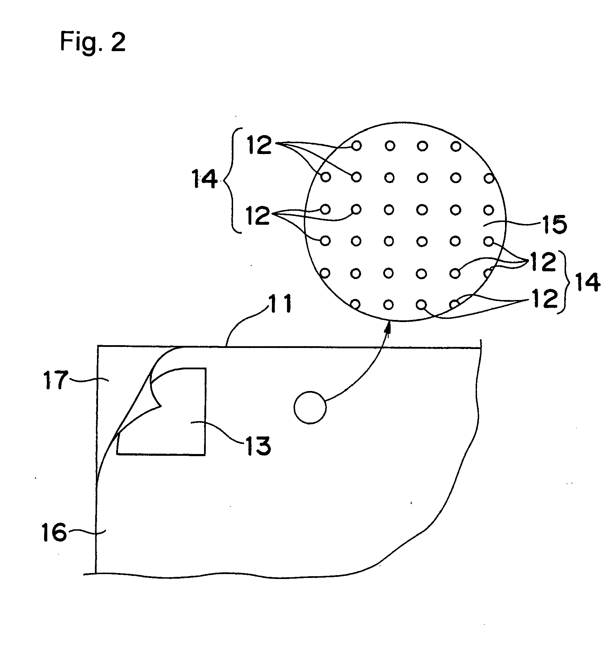

Le support d'écriture 11 sur la figure 2, est un film d'écriture composé d'un film transparent ou semi-transparent de haut poids moléculaire , sur l'envers duquel un film 17 qui réfléchit l'infrarouge est superposé. Sur l'endroit de ce film de haut poids moléculaire, les points 12 sont imprimés en utilisant l'encre contenant le colorant ou pigment qui absorbe l'infrarouge. Comme film qui réfléchit l'infrarouge, on peut utiliser celui qui n'absorbe pas l'infrarouge dont la longueur d'onde est comprise dans la plage de 730 à 1100nm. Plus précisément, il s'agit par exemple d'un film opaque à l'infrarouge du type de ceux qui sont collés sur la vitre ou le pare-brise de voitures. Dans le film d'écriture 11 ayant sur son envers le film 17 qui réfléchit l'infrarouge, le film 17 donne la capacité de réflexion de l'infrarouge à la zone non-imprimée 15 dans laquelle les points 12 ne sont pas imprimés, permettant ainsi d'augmenter la valeur du PCS.

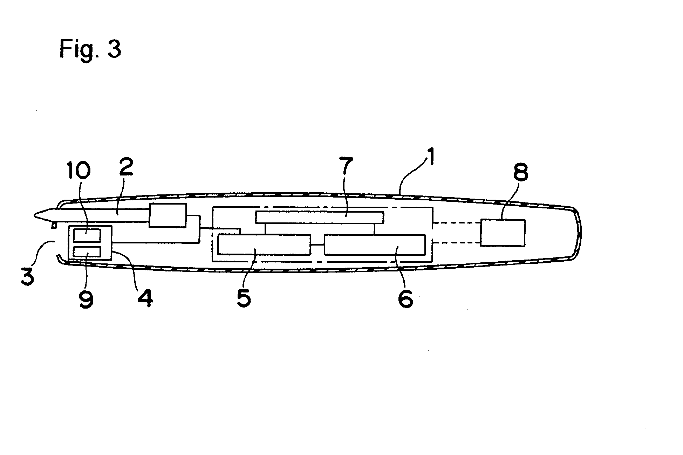

L'unité de saisie des informations manuscrites sous forme de stylo 1 représentée sur la figure 3 est destinée à lire les points 12 du support d'écriture 11 pour le positionnement des points. L'unité de saisie des informations manuscrites 1 comprend, dans son boîtier sous forme de stylo, une partie d'écriture du stylo 2 , un poste de caméra 4 , un processeur 5, et une mémoire 6.

La partie d'écriture du stylo 2 est munie d'une pointe de stylo et d'une encre noirâtre. La partie d'écriture du stylo 2 apte à écrire sur la surface du support d'écriture 11 peut être un stylo à bille, un crayon-feutre, et un stylo à plume etc. L'encre noirâtre comprend non seulement l'encre noire mais aussi l'encre bleue foncée. Lorsque on exprime la partie écrite à l'encre noirâtre par le modèle colorimétrique L*a*b*, la luminance L* est comprise dans la plage entre environ 24 et 27, la chromaticité a* est comprise dans la plage entre environ 2 et 10, et la chromaticité b* est comprise entre environ -0.1 et 6 dans l'espace de couleur.

Il est préférable que l'écart de longueur d'onde au maximum d'absorption soit supérieur ou égal à 80nm entre le colorant de l'encre du stylo et le colorant ou pigment qui absorbe l'infrarouge de la marque de détection. Lorsque cet écart de longueur d'onde au maximum d'absorption est inférieur à 80nm, le contenu écrit par le stylo étant confondu avec les points 12, on a tendance à faire une erreur ou faute de lecture de la marque de détection 14, ce qui est défavorable. La partie d'écriture du stylo 2 peut être munie d'un capteur de pression (non représenté) qui détecte la pression d'écriture.

Le poste de caméra 4 comprend une source lumineuse 9 composée par exemple de la diode LED qui irradie la lumière sur le support d'écriture 11, et d'un élément d'enregistrement 10 tel que les capteurs CCD ou CMOS pour enregistrer des prises de vue sous forme d'images de l'écriture du support 11. Lorsque le stylo se déplace sur le support d'écriture 11, plusieurs points 12 situés autour de la pointe du stylo de la partie d'écriture 2 sont irradiés par la source lumineuse 9, par l'intermédiaire d'une ouverture 3 disposée au bout de l'unité de saisie des informations manuscrites 1, et enregistrés par l'élément d'enregistrement des prises de vue sous forme d'image 10.

Selon l'invention, l'élément lumineux apte à émettre la lumière infrarouge est utilisé en tant que source lumineuse 9, et l'élément apte à enregistrer des prises de vue sous forme d'image du rayonnement infrarouge est utilisé en tant qu'élément d'enregistrement des prises de vue 10. Il est préférable que l'écart entre la longueur d'onde maximum de la lumière émise par la source lumineuse 9 et la longueur d'onde caractéristique au maximum d'absorption du colorant ou pigment qui absorbe l'infrarouge et qui est compris dans les points soit inférieure ou égale à 80nm. Lorsque cet écart de longueur d'onde dépasse 80nm, la sensibilité de détection de l'unité de saisie des informations manuscrites diminue remarquablement, ce qui n'est pas favorable.

Le processeur 5 analyse les données des images des points 12 envoyées par le poste de caméra 4. Plus précisément, le processeur 5 code en binaire les données récupérées du poste de caméra 4 en se reposant sur le niveau d'absorption de l'infrarouge, pour reconnaître la position des points 12. En même temps, en analysant l'arrangement des points 12 qui sont enregistrés sous forme d'images, la position absolue de la pointe du stylo est déterminée, et, par le changement de sa position dans le temps, les caractères écrits ou les figures dessinées sont déterminés à leur tour. Avec un tel traitement du processeur 5, les informations graphologiques peuvent être converties en données numériques. En additionnant les informations provenant du capteur de pression disposé dans la partie d'écriture du stylo 2, aux informations sur le changement de la position de la pointe du stylo, on peut obtenir les données numériques qui sont encore plus proches des données originales concernant les caractères et les figures.

Les données numériques recueillies par le processeur 5 sont stockées dans la mémoire 6. Les données numériques sont enfin transférées à des appareils externes pour être utilisées à la reconstitution des formes ou figures manuscrites ou à la reconnaissance du graphisme. Sur la figure 2, les données sont transférées d'un poste de communication 7 vers les appareils externes par réseau sans fil tel que l'onde électrique ou l'infrarouge. A titre d'exemple, on peut utiliser une unité de saisie des informations manuscrites 1 équipée d'un émetteur ou récepteur Bluetooth. La transmission des données peut être également effectuée par réseau filaire. Les appareils externes qui reçoivent les données comprennent les assistants numériques personnels (PDA), les ordinateurs, et les téléphones portables.

Une batterie 8 sert de source d'alimentation qui assure l'alimentation nécessaire au poste de caméra 4, au processeur 5, à la mémoire 6 et au poste de communication 7 et analogues. Par exemple, une batterie ion-lithium de petite taille est convenable pour cette batterie 8.

Un exemple particulier de l'unité de saisie des informations manuscrites est un stylo numérique qui est mis au point par la société suédoise Anoto.

Exemples

On décrit maintenant la présente invention plus précisément en référence à des exemples. Mais l'invention n'est pas limitée à ces exemples.

Exemple 1 (papier pour l'écriture)

On ajoute une résine polymérisable par oxydation destinée à l'impression (Best One GIGA Medium M de la société T&K TOKA), au pigment organique qui absorbe le proche infrarouge composé du complexe à oxide métallique phtalo-cyanine (YKR-5010 de la société Nihonkasei), de manière à préparer l'encre polymérisable par oxydation dont la densité du pigment est 5% en poids. Avec cette encre, on imprime en offset les points 12 et la zone d'aplat 13 sur un papier blanc de qualité ou un papier recyclé du format commercial, afin de fabriquer le papier d'écriture 11 en tant que support d'écriture. On dispose les points 12 selon l'arrangement défini par la société Anoto pour obtenir une marque de détection. La zone d'aplat 13 est formée dans la marge sur la surface du papier qualité ou recyclé, de dimension 2cm x 2cm. Les points 12 et la zone d'aplat 13 ont une épaisseur d'encre d'environ 1 $\mu$m. Le pigment YKR-5010 a une longueur d'onde caractéristique au maximum d'absorption d'environ 900nm.

Exemple 2

On ajoute une résine polymérisable par oxydation destinée à l'impression (Best One GIGA Medium M) au pigment organique qui absorbe le proche infrarouge composé du complexe à oxide métallique naphtalo-cyanine (NC-232 de la société Sanyoshikisosha) de manière à préparer l'encre polymérisable par oxydation dont la densité du pigment est 3% en poids. Avec cette encre, on imprime en offset les points 12 et la zone d'aplat 13 sur le papier de qualité ou le papier recyclé d'une manière analogue à l'exemple 1 afin de fabriquer le papier d'écriture 11. Le pigment NC-232 a une longueur d'onde caractéristique au maximum d'absorption d'environ 860nm.

Exemple 3

On ajoute une résine polymérisable par oxydation destinée à l'impression (Best One GIGA Medium M) au colorant organique qui absorbe le proche infrarouge composé du complexe à oxide métallique cyanine (YKR-3070 de la société Yamamotokasei) de manière à préparer l'encre polymérisable par oxydation dont la densité du pigment est 8% en poids. Avec cette encre, on imprime en offset les points 12 et la zone d'aplat 13 sur le papier qualité ou recyclé d'une manière analogue à l'exemple 1 afin de fabriquer le papier d'écriture 11. Le pigment YKR-3070 a une longueur d'onde caractéristique au maximum d'absorption d'environ 850nm.

Exemple 4

On ajoute une résine polymérisable par oxydation destinée à l'impression (Best One GIGA Medium M) au colorant organique qui absorbe le proche infrarouge composé du complexe à oxide métallique phtalo (YKR-2900 de la société Yamamotokaseisya) de manière à préparer l'encre polymérisable par oxydation dont la densité du pigment est 1% en poids. Avec cette encre, on imprime en offset les points 12 et la zone d'aplat 13 sur le papier qualité ou recyclé d'une manière analogue à l'exemple 1 afin de fabriquer le papier d'écriture 11. Le pigment YKR-290 a une longueur d'onde caractéristique au maximum d'absorption d'environ 800nm.

Exemple 5

On disperse le pigment organique qui absorbe le proche infrarouge (YKR-5010) et le vernis au moyen de deux rouleaux et on y ajoute une résine durcissable aux UV destinée à l'impression (Medium S de la société T&K TOKA) de manière à préparer l'encre du type durcissement aux UV dont la densité du pigment est 1.3% en poids. Avec cette encre, on imprime en offset les points 12 et la zone d'aplat 13 sur le papier de qualité, le papier recyclé, et le papier de couleur crème, d'une manière analogue à l'exemple 1 afin de fabriquer le papier d'écriture 11.

Exemple 6

On disperse le colorant organique qui absorbe le proche infrarouge (YKR-2900) et le vernis au moyen de deux rouleaux et on y ajoute une résine durcissable aux UV destinée à l'impression (Medium S) de manière à préparer l'encre durcissable aux UV dont la densité du pigment est 0.3% en poids. Avec cette encre, on imprime en offset les points 12 et la zone d'aplat 13 sur le papier qualité, le papier recyclé, et le papier de couleur crème, d'une manière analogue à l'exemple 1 afin de fabriquer le papier d'écriture 11.

Exemple 7

On disperse le colorant organique qui absorbe le proche infrarouge (UVR-01 de la société Nihoncoresusya) dans du toluène et on y ajoute une résine durcissable aux UV destinée à l'impression (Medium S) de manière à préparer l'encre durcissable aux UV dont la densité du colorant est 20% en poids. Avec cette encre, on imprime en offset les points 12 et la zone d'aplat 13 sur le papier qualité, le papier recyclé, et le papier de couleur crème, d'une manière analogue à l'exemple 1 afin de fabriquer le papier d'écriture 11. Le colorant YKR-290 a une longueur d'onde caractéristique au maximum d'absorption d'environ 850nm.

Exemple 8(film pour l'écriture)

On ajoute une résine durcissable aux UV destinée à l'impression (Medium 161S de al société TOKA), au pigment organique qui absorbe le proche infrarouge (YKR-5010 de la société Yamamotokaseisya) et qui est utilisé dans l'exemple 1, de manière à préparer l'encre durcissable aux UV dont la densité du pigment est 3% en poids. Avec cette encre, on imprime en offset les points 12 et la zone d'aplat 13 sur le film blanc en chlorure de polyvynil. On dispose les points 12 selon l'arrangement défini par la société Anoto. La zone d'aplat 13 est formée dans la marge sur la surface de ce film blanc, de dimension de 2cm x 2 cm. Les points 12 et la zone d'aplat 13 ont une épaisseur d'encre d'environ 1$\mu$m. Après l'impression, on irradie avec des rayons ultraviolets au moyen de la lampe UV(UVH-800H de la sosiété USHIO, longueur d'onde :255nm) pour durcir l'encre, afin de fabriquer le film pour l'écriture 11 qui sert du support d'écriture. On en découpe le film de 80cm de long sur 130cm de large.

Exemple 9

On disperse le pigment organique qui absorbe le proche infrarouge (YKR-5010) et le vernis au moyen de deux rouleaux et on y ajoute une résine durcissable aux UV destinée à l'impression (Medium S de manière à préparer l'encre durcissable aux UV dont la densité du pigment est 1.3% en poids. Avec cette encre, on imprime en offset les points 12 et la zone d'aplat 13 sur le film incolore et transparent en chlorure de polyvynil d'une manière analogue à l'exemple 8. Après l'impression, on irradie des rayons ultraviolets sur la partie imprimée pour la durcir. Enfin, on adhère sur l'envers de ce film imprimé, un film opaque à l'infrarouge (rayblock de la société Speedline)composé d'un film polyéthylène transparent sur lequel une couche métallique qui réfléchit l'infrarouge est formée, c'est ainsi que le film pour l'écriture 11 est obtenu.

Exemple 10

On disperse le colorant organique qui absorbe le proche infrarouge (UR-01 HM de la société Nihoncoresusya) dans le toluène et on y ajoute une résine durcissable aux UV destinée à l'impression (Medium S) de manière à préparer l'encre durcissable aux UV dont la densité du colorant est 20% en poids. Avec cette encre, on imprime en offset les points 12 et la zone d'aplat 13 sur le film incolore et transparent en chlorure de polyvynil d'une manière analogue à l'exemple 8. Après l'impression, on irradie des rayons ultraviolets sur la partie imprimée pour la durcir. Enfin, on adhère sur l'envers de ce film imprimé un film opaque à l'infrarouge (rayblock) pour former le film pour l'écriture 11. Le colorant organique qui absorbe le proche infrarouge a une longueur d'onde caractéristique au maximum d'absorption de 850nm.

Exemple 11

On disperse le pigment organique qui absorbe le proche infrarouge (YKR-5010) et le vernis au moyen de deux rouleaux et on y ajoute une résine durcissable aux UV destinée à l'impression (Medium S) de manière à préparer l'encre durcissable aux UV dont la densité du pigment est 2.5% en poids. Avec cette encre, on imprime en offset les points 12 et la zone d'aplat 13 sur le film blanc en chlorure de polyvynil (cardecosheet de la société IKC) d'une manière analogue à l'exemple 8. Après l'impression, on irradie des rayons ultraviolets sur la partie imprimée pour la durcir afin d'obtenir le film pour l'écriture 11.

Exemple 12

En opérant d'une manière analogue à l'exemple 11, on change la densité du pigment organique qui absorbe le proche infrarouge (YKR-5010) de 2.5% en poids à 5% en poids pour préparer l'encre durcissable aux UV. Avec cette encre, on imprime en offset les points 12 et la zone d'aplat 13 sur le film incolore et transparent en chlorure de polyvynil d'une manière analogue à l'exemple 8. Après l'impression, on irradie des rayons ultraviolets sur la partie imprimée pour la durcir. Enfin, on adhère sur l'envers de ce film imprimé un film opaque à l'infrarouge (rayblock) pour former le film pour l'écriture 11.

Exemple 13

En opérant d'une manière analogue à l'exemple 11, on change la densité du pigment organique qui absorbe le proche infrarouge (YKR-5010) de 2.5% en poids à 10% en poids pour préparer l'encre durcissable aux UV. Avec cette encre, on imprime en offset les points 12 et la zone d'aplat 13 sur le film incolore et transparent en chlorure de polyvynil d'une manière analogue à l'exemple 8. Après l'impression, on irradie les rayons ultraviolets sur la partie imprimée pour la durcir. Enfin, on adhère sur l'envers de ce film imprimé un film opaque à l'infrarouge (rayblock) pour former le film pour l'écriture 11.

Exemple 14 (l'unité de saisie du type stylo pour l'écriture sur le film)

On utilise une pièce de caméra appartenant au stylo numérique personnel fabriqué par la société américaine Logitech (No. de pièce 965102-0100-2, longueur d'onde maximum de la source lumineuse : 850nm), en tant qu'unité de saisie des informations manuscrites représentée sur la figure 3. On disperse dans l'isopropanol le colorant organique qui absorbe le proche infrarouge (800NP de la société AVECIA), de manière à préparer l'encre pour la partie d' écriture du stylo 2 dont la densité de ce colorant est 50 % en poids.

Exemple comparatif (papier pour l'écriture)

En utilisant l'encre noire destinée à l'impression en offset polymérisable par oxydation , appelée " l'encre de Chine"(Super TEKPLUS l'encre de Chine M de la société T&K TOKA), on imprime en offset les points 12 et la zone d'aplat 13 sur le papier qualité et le papier recyclé, de la même manière que l'exemple 1, pour fabriquer le papier pour l'écriture 11.

Exemple comparatif 2

On ajoute une résine durcissable aux UV destinée à l'impression (Medium 161S), au pigment organique(BX132 de la société Dainippon inki kagaku kogyo), de manière à préparer l'encre durcissable aux UV dont la densité du pigment est 10% en poids. Avec cette encre, on imprime en offset les points 12 et la zone d'aplat 13 sur le papier qualité et le papier recyclé de la même manière que l'exemple 1, pour obtenir un papier de l'écriture 1. Le pigment BX132 a une longueur d'onde caractéristique au maximum d'absorption de 700nm.

Exemple comparatif 3

On ajoute une résine polymérisable par oxydation destinée à l'impression (Best One GIGA Medium M de la société T&K TOKA) au pigment organique qui absorbe le proche infrarouge composé du complexe à oxide métallique phtalo-cyanine (YKR-5010 de par la société Yamamotokasei) et qui est utilisé à l'exemple 1, de manière à préparer l'encre polymérisable par oxydation dont la densité du pigment est 12% en poids. Avec cette encre, on imprime en offset les points 12 et la zone d'aplat 13 sur le papier de qualité ou recyclé d'une manière analogue à l'exemple 1 afin de fabriquer le papier d'écriture 11.

Exemple comparatif 4

On disperse le pigment organique (BX132) et le vernis au moyen de deux rouleaux et on y ajoute une résine durcissable aux UV destinée à l'impression (Medium S), de manière à préparer l'encre durcissable aux UV dont la densité du pigment est 10% en poids. Avec cette encre, on imprime en offset les points 12 et la zone d'aplat 13 sur le papier de qualité, le papier recyclé, et le papier de couleur crème, d'une manière analogue à l'exemple 1 afin de fabriquer le papier d'écriture 11.

Exemple comparatif 5

En opérant d'une manière analogue à l'exemple comparatif 4, on change la densité du pigment organique (BX132) de 10% en poids à 1% en poids pour préparer l'encre du type durcissement aux UV. Avec cette encre, on imprime en offset les points 12 et la zone d'aplat 13 sur le papier qualité, le papier recyclé, et le papier de couleur crème, d'une manière analogue à l'exemple 1 afin de fabriquer le papier d'écriture 11.

Exemple comparatif 6

En utilisant l'encre noire destinée à l'impression en offset durcissable aux UV, appelée " l'encre de Chine"(F.D. Carton P l'encre de Chine Ro de la société Toyo inki), on imprime en offset les points 12 et la zone d'aplat 13 sur le papier qualité, le papier recyclé, et le papier de couleur crème, d'une manière analogue à l'exemple 1 afin de fabriquer le papier d'écriture 11.

Exemple comparatif 7 (film pour l'écriture)

En utilisant l'encre noire destinée à l'impression en offset durcissable aux UV(UV 161, encre de Chine S de la société T&K TOKA), on imprime en offset les points 12 et la zone d'aplat 13 sur le film blanc en chlorure de polyvynil d'une manière analogue à l'exemple 8. Ensuite, on fait durcir la partie imprimée par irradiation UV pour fabriquer le papier d'écriture 11.

Exemple comparatif 8

On disperse le pigment organique qui absorbe le proche infrarouge (YKR-5010) et le vernis au moyen de deux rouleaux et on y ajoute une résine durcissable aux UV destinée à l'impression (Medium S) de manière à préparer l'encre durcissable aux UV dont la densité du pigment est 1.3% en poids. Avec cette encre, on imprime en offset les points 12 et la zone d'aplat 13 sur le film incolore et transparent en chlorure de polyvynil d'une manière analogue à l'exemple 8. Ensuite, on fait durcir la partie imprimée par irradiation UV pour fabriquer le papier d'écriture 11.

Exemple comparatif 9

En utilisant l'encre noire destinée à l'impression en offset du type durcissement aux UV(F.D. Carton P l'encre de Chine Ro), on imprime en offset les points 12 et la zone d'aplat 13 sur le film incolore et transparent en chlorure de polyvynil d'une manière analogue à l'exemple 8. Ensuite, on fait durcir la partie imprimée par irradiation UV pour fabriquer le papier d'écriture 11. Enfin on adhère sur l'envers de ce film imprimé un film opaque à l'infrarouge (rayblock) pour former le film pour l'écriture 11.

Exemple comparatif 10

On disperse le pigment organique qui absorbe le proche infrarouge (YKR-5010) et le vernis au moyen de deux rouleaux et on y ajoute une résine durcissable aux UV destinée à l'impression (Medium S)
de manière à préparer l'encre durcissable aux UV dont la densité du pigment est 1.3% en poids. Avec cette encre, on imprime en offset les points 12 et la zone d'aplat 13 sur le film incolore et transparent en chlorure de polyvynil d'une manière analogue à l'exemple 8. Après l'impression, on irradie des rayons ultraviolets sur la partie imprimée pour la durcir. Enfin, on adhère sur l'envers de ce film imprimé, un film opaque à l'infrarouge (rayblock de la société Speedline) composé d'un film polyéthylène transparent sur lequel une couche métallique qui réfléchit l'infrarouge est formée, pour fabriquer le film pour l'écriture 11.

Exemple comparatif 11

On mélange l'encre noire destinée à l'impression en offset du type durcissement aux UV(F.D. Carton P l'encre de Chine Ro) de l'exemple comparatif 9 avec la résine durcissable aux UV destinée à l'impression (Medium S) dans le rapport de 80% en poids contre 20% en poids, pour fabriquer l'encre du type durcissement aux UV. Avec cette encre, on imprime en offset les points 12 et la zone d'aplat 13 sur le film incolore et transparent en chlorure de polyvynil d'une manière analogue à l'exemple 8. Après l'impression, on irradie les rayons ultraviolets sur la partie imprimée pour la durcir. Enfin, on adhère sur l'envers de ce film imprimé, un film opaque à l'infrarouge (rayblock de la société Speedline) composé d'un film polyéthylène transparent pour obtenir le film pour l'écriture 11.

Exemple comparatif 12

En utilisant l'encre noire destinée à l'impression en offset polymérisable par oxydation (New Daicure BF-Z l'encre de Chine pour Flash de la société Dainippon Inki Kagaku Kogyo), on imprime en offset les points 12 et la zone d'aplat 13 sur le film incolore et transparent en chlorure de polyvynil d'une manière analogue à l'exemple 8. Après l'impression, on irradie les rayons ultraviolets sur la partie imprimée pour la durcir. Enfin, on adhère sur l'envers de ce film imprimé, un film opaque à l'infrarouge (rayblock) afin de fabriquer le film pour l'écriture 11.

Exemple comparatif 13(l'unité de saisie du type stylo pour l'écriture sur le film)

On utilise une pièce de caméra appartenant au stylo numérique personnel fabriqué par la société américaine Logitech (No. de pièce 965102-0100-2, longueur d'onde maximum de la source lumineuse : 850nm) en tant qu' unité de saisie des informations manuscrites représentée sur la figure 3. On disperse dans l'isopropanol le colorant organique qui absorbe le proche infrarouge (YKR-2900) dont la longueur d'onde au maximum d'absorption est de 850nm, de manière à préparer l'encre pour la partie d'écriture du stylo 2, dont la densité du colorant est 50 % en poids.

On a mesuré la teinte (la luminance L* et la chromaticité a*, b*) des papiers ou des films pour l'écriture qui sont obtenus au moyen d'un appareil de mesure de couleur Color-Guide fabriqué par la société allemande BYK-Gardner GmbH. Cette mesure de couleur s'effectue dans la zone d'aplat 13 ainsi que dans la zone non-imprimée 15, c'est à dire la partie de fond de ce papier ou film. Les tableaux ci-dessous représentent respectivement les résultats obtenus en utilisant le papier ou le film d'écriture : le tableau 1 représente le résultat de mesure effectué avec le papier qualité blanc, le tableau 2 représente celui effectué avec le papier recyclé, le tableau 3 représente celui effecué avec le papier de couleur crème, et le tableau 4 représente celui effectué avec le film en chlorure de polyvynil.

Tableau 1 papier de qualité

|  | Une zone d'aplat | | | Zone non-imprimée | | |
|---|---|---|---|---|---|---|
|  | L* | a* | b* | L* | a* | b* |
| Exemple 1 | 66.4 | -12.7 | 42.5 | 92.8 | -0.1 | 1.1 |
| Exemple 2 | 80.3 | -10.6 | 30.9 | 92.7 | -0.1 | 0.3 |
| Exemple 3 | 45.0 | -19.5 | 5.8 | 92.9 | 0.0 | 0.7 |
| Exemple 4 | 87.7 | -8.7 | 9.4 | 92.7 | 0.1 | 0.6 |
| Exemple 5 | 77.3 | -9.5 | 36.1 | 90.4 | -2.1 | 3.5 |
| Exemple 6 | 78.2 | -5.5 | 25.6 | 90.4 | -2.1 | 3.5 |
| Exemple 7 | 69.1 | -6.8 | 30.9 | 90.4 | -2.1 | 3.5 |
| Exemple comparatif 1 | 3.0 | 0.2 | -0.7 | 92.7 | -0.5 | 0.7 |
| Exemple comparatif 2 | 43.8 | -5.5 | -58.5 | 92.7 | -0.1 | 0.5 |
| Exemple comparatif 3 | 50.9 | -11.6 | 51.9 | 92.7 | -0.1 | 0.4 |
| Exemple comparatif 4 | 22.9 | 4.8 | -33.0 | 90.4 | -2.1 | 3.5 |
| Exemple comparatif 5 | 35.7 | 0.7 | -34.6 | 90.4 | -2.1 | 3.5 |
| Exemple comparatif 6 | 15.5 | 0.6 | -0.6 | 90.4 | -2.1 | 3.5 |

Tableau 2 Papier recyclé

|  | Zone d'aplat | | | Zone non-imprimée | | |
|---|---|---|---|---|---|---|
|  | L* | a* | b* | L* | a* | b* |
| Exemple 1 | 70.8 | -13.3 | 41.1 | 92.8 | -0.2 | 1.1 |
| Exemple 2 | 79.1 | -11.1 | 31.0 | 92.8 | -0.4 | -0.2 |
| Exemple 3 | 47.2 | -11.0 | 6.6 | 92.5 | -0.1 | 1.3 |
| Exemple 4 | 86.8 | -8.3 | 9.5 | 92.6 | -0.1 | 0.9 |

Suite de tableau

| | Zone d'aplat | | | Zone non-imprimée | | |
|---|---|---|---|---|---|---|
| | L* | a* | b* | L* | a* | b* |
| Exemple 5 | 77.5 | -12.0 | 33.5 | 87.1 | -1.9 | 3.6 |
| Exemple 6 | 78.4 | -6.4 | 22.6 | 87.1 | -1.9 | 3.6 |
| Exemple 7 | 69.7 | -9.0 | 29.1 | 87.1 | -1.9 | 3.6 |
| Exemple comparatif 1 | 9.6 | 0.3 | -1.3 | 92.5 | -0.8 | 0.1 |
| Exemple comparatif 2 | 46.8 | -1.7 | -53.1 | 92.7 | -0.3 | 0.1 |
| Exemple comparatif 3 | 51.3 | -12.0 | 53.1 | 92.6 | -0.2 | 1.0 |
| Exemple comparatif 4 | 22.6 | 3.3 | -33.1 | 87.1 | -1.9 | 3.6 |
| Exemple comparatif 5 | 35.4 | 0.8 | -34.2 | 87.1 | -1.9 | 3.6 |
| Exemple comparatif 6 | 15.7 | 0.7 | -0.8 | 87.1 | -1.9 | 3.6 |

Tableau 3 Papier couleur crème

| | Zone d'aplat | | | Zone non-imprimée | | |
|---|---|---|---|---|---|---|
| | L* | a* | b* | L* | a* | b* |
| Exemple 5 | 77.0 | -11.2 | 33.9 | 82.9 | -1.6 | 23.0 |
| Exemple 6 | 77.6 | -6.6 | 23.0 | 82.9 | -1.6 | 23.0 |
| Exemple 7 | 69.7 | -8.3 | 29.1 | 82.9 | -1.6 | 23.0 |
| Exemple comparatif 4 | 22.0 | 4.5 | -32.4 | 82.9 | -1.6 | 23.0 |
| Exemple comparatif 5 | 35.1 | 0.8 | -34.0 | 82.9 | -1.6 | 23.0 |
| Exemple comparatif 6 | 15.8 | 0.7 | -0.7 | 82.9 | -1.6 | 23.0 |

Tableau 4 Film

| | Zone d'aplat | | | Zone non-imprimée | | |
|---|---|---|---|---|---|---|
| | L* | a* | b* | L* | a* | b* |
| Exemple 8 | 62.5 | -13.9 | 51.6 | 92.7 | -0.1 | 0.7 |
| Exemple 9 | 77.3 | -9.5 | 36.1 | 90.4 | -2.1 | 3.5 |
| Exemple 10 | 64.3 | -10.6 | 34.4 | 90.4 | -2.1 | 3.5 |
| Exemple 11 | 67.0 | -13.1 | 38.6 | 93.2 | -1.8 | 4.2 |
| Exemple 12 | 60.0 | -15.1 | 40.0 | 90.4 | -2.1 | 3.5 |
| Exemple 13 | 55.1 | -15.3 | 45.2 | 90.4 | -2.1 | 3.5 |
| Exemple Comparatif 7 | 2.2 | -0.3 | -1.1 | 92.8 | -0.6 | 0.8 |
| Exemple Comparatif 8 | 77.3 | -9.5 | 36.1 | 90.4 | -2.1 | 3.5 |
| Exemple Comparatif 9 | 15.5 | 0.6 | -0.6 | 90.4 | -2.1 | 3.5 |
| Exemple Comparatif 10 | 77.3 | -9.5 | 36.1 | 90.4 | -2.1 | 3.5 |
| Exemple Comparatif 11 | 25.0 | 0.9 | -0.06 | 90.4 | -2.1 | 3.5 |
| Exemple Comparatif 12 | 20.0 | 0.9 | -0.04 | 90.4 | -2.1 | 3.5 |

Le tableau 5 représente la différence de couleur $\Delta E^*_{ab}(p\text{-}p)$ calculée par les résultats des mesures de tableaux 1 à 4, ainsi que la sensation de gêne que l'on peut éprouver lors de la perception visuelle des points imprimés 12.

Les papiers et les films d'écriture obtenus dans les exemples 1 à 13 ont la différence de couleur $\Delta E^*_{ab}(p\text{-}p)$ inférieure ou égale à 60. On n'a guère pu percevoir visuellement les points 12 imprimés dans ces exemples, et on n'a guère éprouvé la sensation de gêne. Par contre, les papiers et les films d'écriture obtenus par les exemples 1 à 12 ont la différence de couleur $\Delta E^*_{ab}(p\text{-}p)$ supérieure à 60. Dans ces exemples, les points 12 étant très apparents, la sensation de gêne était très forte. Il est ainsi évident que lorsque la différence de couleur $\Delta E^*_{ab}(p\text{-}p)$ est inférieure ou égale à 60, on peut offrir un papier et un film d'un usage plus agréable, tandis que lorsque cette différence de couleur dépasse 60, le papier et le film donnent une sensation de gêne.

Tableau 5 La différence de couleur $\Delta E^*_{ab}(p\text{-}p)$ et la conformité des points

| | Papier qualité | | Papier recyclé | | Papier de couleur crème | | Film | |
|---|---|---|---|---|---|---|---|---|
| | | Points | | Points | | Points | | Points |
| | $\Delta E$ | | $\Delta E$ | | $\Delta E$ | | $\Delta E$ | |
| Exemple 1 | 50 | ○ | 47 | ○ | - | - | - | - |
| Exemple 2 | 34 | ○ | 35 | ○ | - | - | - | - |
| Exemple 3 | 51 | ○ | 45 | ○ | - | - | - | - |
| Exemple 4 | 14 | ○ | 13 | ○ | - | - | - | - |
| Exemple 5 | 36 | ○ | 33 | ○ | 18 | ○ | - | - |
| Exemple 6 | 25 | ○ | 21 | ○ | 10 | ○ | - | - |
| Exemple 7 | 35 | ○ | 32 | ○ | 18 | ○ | - | - |
| Exemple 8 | - | - | - | - | - | - | 60 | ○ |
| Exemple 9 | - | - | - | - | - | - | 36 | ○ |
| Exemple 10 | - | - | - | - | - | - | 41 | ○ |
| Exemple 11 | - | - | - | - | - | - | 45 | ○ |
| Exemple 12 | - | - | - | - | - | - | 49 | ○ |
| Exemple 13 | - | - | - | - | - | - | 56 | ○ |
| Exemple comparatif 1 | 89 | × | 83 | × | - | - | - | - |
| Exemple comparatif 2 | 76 | × | 70 | × | - | - | - | - |
| Exemple comparatif 3 | 67 | × | 68 | × | - | - | - | - |
| Exemple comparatif 4 | 77 | × | 74 | × | 82 | × | - | - |
| Exemple comparatif 5 | 67 | × | 64 | × | 75 | × | - | - |
| Exemple comparatif 6 | 75 | × | 72 | × | 72 | × | - | - |
| Exemple comparatif 7 | - | - | - | - | - | - | 90 | × |
| Exemple comparatif 8 | - | - | - | - | - | - | 36 | ○ |
| Exemple comparatif 9 | - | - | - | - | - | - | 75 | × |
| Exemple comparatif 10 | - | - | - | - | - | - | 36 | ○ |
| Exemple comparatif 11 | - | - | - | - | - | - | 66 | × |
| Exemple comparatif 12 | - | - | - | - | - | - | 71 | × |

Appréciation des points

○ : On éprouve moins la sensation de gêne ou on ne l'éprouve pas.

× : On éprouve la sensation de gêne.

On a mesuré le CPS des papiers et des films d'écriture obtenus dans les exemples 1 à 3 et 8 et dans les exemples comparatifs 1 à 3 et 7, en utilisant le Digital MicroScope (DMS910) de la société allemande TECHKON. On a également fait un test de lecture sur les papiers et les films d'écriture. Lors du test de lecture, on a utilisé en tant qu'unité de saisie des informations manuscrites 1, un stylo numérique de la société japonaise Hitachi Maxell (DP-101U, Longueur d'onde au maximum d'absorption de la lumière irradiée émise par la source lumière 9 : 850nm). Le tableau 6 représente le résultat de ce test.

Tableau 6 PCS

|  | Papier qualité | Papier recyclé | Film | Test de lecture |
|---|---|---|---|---|
| Exemple 1 | 0.84 | 0.83 | - | ○ |
| Exemple 2 | 0.78 | 0.76 | - | ○ |
| Exemple 3 | 0.87 | 0.82 | - | ○ |
| Exemple 4 | 0.65 | 0.65 | - | ○ |
| Exemple 8 | - | - | 0.88 | ○ |
| Exemple comparatif 1 | 0.88 | 0.86 | - | ○ |
| Exemple comparatif 2 | 0.45 | 0.44 | - | × |
| Exemple comparatif 3 | 0.88 | 0.87 | - | ○ |
| Exemple comparatif 7 | - | - | 0.88 | ○ |
| Appréciation du test de lecture<br>○ : On peut lire d'une manière sûre les caractères écrits etc.<br>×:On ne peut pas lire les caractères etc. | | | | |

D'après le résultat du tableau 6, il apparaît que la lecture des informations manuscrites s'effectue de façon appropriée lorsque le PCS est supérieur ou égal à 0.5. Par contre la lecture n'est pas réussie lorsque le PCS est inférieur à 0.5.

On a en outre examiné la perception visuelle des caractères écrits par un stylo noir sur les papiers fabriqués dans les exemples 5 à 7 ainsi que dans les exemples comparatifs 4 à 6. On a utilisé un stylo à bille noir de la société japonaise Zebra (N-5000). Ce stylo a la luminance $L^*$=24.98, la chromaticité $a^*$=9, la chromaticité $b^*$=-0.09. A partir de cette luminance et ces chromaticités et de la couleur de l'encre pour l'impression, on calcule la différence de couleur $\Delta E^*_{ab}$(p-b) comme cela est représenté sur le tableau 7. On a également fait un test de lecture.

Lors de ce test de lecture, en tant qu'unité de saisie des informations manuscrites, on a utilisé un stylo numérique personnel de la société américaine Logitech (No. de pièce 965102-0100-2). La longueur d'onde au maximum d'absorption de la lumière irradiée émise par la source lumineuse appartenant à ce stylo numérique est 850nm. Le tableau 7 représente également la longueur d'onde au maximum d'absorption de l'encre pour l'impression des points, ainsi que la différence entre cette longueur d'onde et celle maximum de ladite source lumineuse.

Tableau 7

|  | La différence de couleur$\Delta E^*_{ab}$(p-p) | La perception visuelle des caractères | Longueur d'onde au maximum d'absorbtion du pigment (nm) | La différence des longueurs d'onde (nm) | Test de lecture |
|---|---|---|---|---|---|
| Exemple 5 | 66.3 | ○ | 850 | 0 | ○ |
| Exemple 6 | 60.9 | ○ | 850 | 0 | ○ |
| Exemple 7 | 56.2 | ○ | 850 | 0 | ○ |
| Exemple comparatif 4 | 33.3 | × | 700 | 100 | △ |
| Exemple comparatif 5 | 37.1 | × | 700 | 100 | × |

Suite de tableau

|  | La différence de couleur$\Delta E^*_{ab}$(p-p) | La perception visuelle des caractères | Longueur d'onde au maximum d'absorbtion du pigment (nm) | La différence des longueurs d'onde (nm) | Test de lecture |
|---|---|---|---|---|---|
| Exemple comparatif 6 | 12.8 | ✕ | - | - | ○ |

| Appréciation de la reconnaissance des caractères |
|---|
| ○:On peut percevoir avec précision les caractères écrits etc. |
| ✕:I1 est difficile à percevoir visuellement les caractères etc. |

Appréciation du test de lecture

o:On peut lire d'une manière sûre les caractères écrits etc.
△:I1 arrive que l'on ne puisse pas lire les les caractères.
(Il arrive que l'erreur surgisse partiellement.)
x:On ne peut pas lire les caractères.

Lorsque la différence de couleur $\Delta E^*_{ab}$(p-b) est supérieure ou égale à 50, on peut percevoir les caractères écrits d'une manière exacte et complète. Par contre, lorsque la différence de couleur$\Delta E^*_{ab}$(p-b) est inférieure à 50, il est difficile de percevoir les caractères visuellement.

Dans les exemples 5 à 7, lors de l'utilisation de l'unité de saisie des informations manuscrites, la sensibilité de détection de la marque de détection 14 était bonne. Par contre, dans les exemples comparatifs 4 à 6, la sensibilité de détection de la marque de détection 14 n' était pas bonne. Ceci est dû au fait que la différence entre la longueur d'onde au maximum d'absorption de l'encre pour l'impression des points et la longueur d'onde maximum de la source lumineuse est grande comme 100nm.

On a également fait un test de lecture des caractères écrits sur les films d'écriture fabriqués dans les exemples 9 à 11 ainsi que dans les exemples compartifs 8 à 10, en utilisant l'unité de saisie sous forme de stylo utilisé dans l'exemple 14 ou dans l'exemple comparatif 13. On a fait ce test deux fois. La première fois, on a écrit les caractères sur le film vierge d'écriture 11 pour savoir si la lecture est possible ou non. La deuxième fois, avant l'écriture des caractères pour le test, on a éliminé le contenu écrit en premier lieu avec une gomme(eraser). Le tableau 8 représente le résultat de ce test.

Tableau 8

|  | La nature de films | Le film qui réfléchit l'infrarouge présent ou non | Unité de saisie sous forme de stylo utlisée | | Le résultat de test | |
|---|---|---|---|---|---|---|
|  |  |  | Exemple 14 | Exemple comparatif 13 | Première fois | Deuxième fois |
| Exemple 9 | Incoloré et transparent | ○ | ○ | - | ○ | ○ |
| Exemple 10 | Incoloré et transparent | ○ | ○ | - | ○ | ○ |
| Exemple 11 | Blanc et opaque | ✕ | ○ | - | ○ | ○ |
| Exemple comparatif 8 | Incoloré et transparent | ✕ | ○ | - | ✕ | ✕ |
| Exemple comparatif 9 | Incoloré et transparent | ○ | ○ | - | ○ | ✕ |

Suite de tableau

| | La nature de films | Le film qui réfléchit l'infrarouge présent ou non | Unité de saisie sous forme de stylo utlisée | | Le résultat de test | |
|---|---|---|---|---|---|---|
| | | | Exemple 14 | Exemple comparatif 13 | Première fois | Deuxième fois |
| Exemple comparatif 10 | Incoloré et transparent | ○ | - | ○ | ○ | × |

| Appréciation du test de lecture |
|---|
| ○:On peut lire d'une manière sûre les caractères écrits. |
| × : On ne peut pas lire les caractères. |

Au cas où le film d'écriture serait formé par un film transparent, lorsque ce film n'est pas muni, sur son envers, d'un film qui réfléchit l'infrarouge comme dans l'exemple comparatif 8, les caractères écrits ne sont ni identifiés ni lus par l'unité de saisie sous forme de plume, et en conséquence, il est impossible d'utiliser ce film en tant que système de saisie des information. Par contre, dans les exemples 9 et 10 ainsi que dans les exemples comparatifs 9 et 10, étant donné que le film est doté, sur son envers, d'un film qui réfléchit l'infrarouge, les caractères écrits peuvent être identifiés et lus d'une manière exacte. D'après ce qui précède, lorsque la capacité de réflexion est donnée sur la zone non-imprimée 15 du film d'écriture 11, le rapport signal sur bruit entre la marque de détection 14 et la zone non-imprimée 15 dans la région de l'infrarouge est rendu satisfaisant. Ainsi, on est arrivé à constater que la marque de détection est détectée d'une manière correcte et le contenu écrit est identifié et lu avec précision, au moyen du poste de caméra 4 de l'unité de saisie sous forme de stylo.

Dans l'exemple comparatif 10, le test de lecture de la deuxième fois a eu un résultat inadéquat. Ceci est dû au fait que le poste de caméra 4 de l'unité de saisie sous forme de stylo a eu du mal à distinguer les "déchets de l'encre" qui sont générés lors de l'élimination des caractères par le moyen d'effacement ("eraser"), et les points 12 les uns des autres, car la longueur d'onde d'absorption des points 12 qui constituent la marque de détection est la même que la longueur d'onde d'absorption de l'encre pour le stylo.

On a également examiné l'influence du support d'écriture selon l'invention sur la couleur du papier qui constitue un substrat. Plus précisément, on a formé la zone d'aplat 13 sur le papier ayant trois couleurs de fond telles que blanc, jaune, et bleu, en utilisant respectivement l'encre selon l'exemple 5 (l'encre contient un pigment), l'encre selon l'exemple 7 (l'encre contient un colorant) et l'encre noire selon l'exemple comparatif 3. Le tableau 9 représente la couleur de fond de chaque papier, c'est à dire la valeur de mesure L*a*b* de la zone non-imprimée 15, la valeur de mesure de la zone d'aplat 13 de l'encre respective sur chaque papier, et la différence de couleur $\Delta E^*_{ab}$(p-p) entre la zone d'aplat 13 et la zone non-imprimée 15, calculée à partir de ces valeurs.

Tableau 9

| | zone d'aplat | | | Zone non-imprimée | | | ΔE |
|---|---|---|---|---|---|---|---|
| | L* | a* | b* | L* | a* | b* | |
| Papier blanc | | | | | | | |
| Exemple 5 | 77.3 | -9.5 | 36.1 | 90.4 | -2.1 | 3.5 | 36 |
| Exemple 7 | 69.1 | -6.8 | 30.9 | 90.4 | -2.1 | 3.5 | 35 |
| Exemple comparatif 6 | 15.5 | 0.6 | -0.6 | 90.4 | -2.1 | 3.5 | 75 |
| Papier jaune | | | | | | | |
| Exemple | 78.2 | -11.5 | 36.5 | 87.0 | -4.1 | 52.8 | 20 |
| Exemple 7 | 70.1 | -8.7 | 31.6 | 87.0 | -4.1 | 52.8 | 28 |
| Exemple comparatif 6 | 16.1 | 0.8 | -0.6 | 87.0 | -4.1 | 52.8 | 89 |

Suite de tableau

| Papier bleu | | | | | | | |
|---|---|---|---|---|---|---|---|
| Exemple 5 | 77.7 | -14.1 | 32.8 | 88.4 | -11.5 | -3.2 | 38 |
| Exemple 7 | 70.0 | -10.9 | 28.5 | 88.4 | -11.5 | -3.2 | 37 |
| Exemple comparatif 6 | 15.7 | 1.0 | -0.7 | 88.4 | -11.5 | -3.2 | 74 |

Comme cela est représenté sur le tableau 9, au cas où l'impression serait faite à l'encre des exemples 5 et 7, la différence de couleur $\Delta E^*_{ab}$(p-p) de chaque papier blanc, jaune, et bleu est petite et comprise dans la plage de 20 à 40 respectivement, et la marque de détection 14 était peu apparente. En d'autres termes, le papier d'écriture 11 selon l'invention peut avoir une marque de détection 14 peu apparente pour pouvoir maîtriser la sensation de gêne éprouvée par l'utilisateur, quelle que soit la couleur de ces substrats de papier choisie dans un groupe constitué de teintes blanche, jaune, et bleue.

Par contre, au cas où l'impression serait faite en utilisant l'encre de l'exemple 6, la différence de couleur $\Delta E^*_{ab}$(p-p)est grande et supérieure ou égale à 70, et la marque de détection 14 était très apparente, de sorte qu'il se pose le problème de la sensation de gêne éprouvée par l'utiilisateur.

Le tableau 10 représente le résultat du mesure L\*a\*b\* qui est effectué dans les zones d'aplat formées sur un papier qualité en utilisant trois sortes de stylos noirs mis sur marché. On a utilisé un stylo N-5000 (stylo 1) de la société japonaise Zebra, un stylo SA-13 (stylo 2) également de la société japonaise Mitsubisi ball pen, et un stylo "ecomate" (stylo 3) de la société japonaise Pilot. On a calculé la différence de couleur $\Delta E^*_{ab}$(p-b) entre les zones d'aplat 13 selon les exemples 5,7 et l'exemple comparatif 6, et les zones d'aplat écrites par ces trois sortes de stylos (tableau 11).

Tableau 10 les zones d'aplat écrites par les stylos

| | L* | a* | b* |
|---|---|---|---|
| Stylo 1 | 25.0 | 9.2 | -0.01 |
| Stylo 2 | 26.4 | 2.9 | 4.8 |
| Stylo 3 | 25.4 | 3.1 | 5.4 |

Tableau 11 la différence de couleur $\Delta E^*_{ab}$(p-b)

| | Stylo 1 | Stylo 2 | Stylo 3 |
|---|---|---|---|
| Exemple 5 | 66.3 | 61.0 | 61.6 |
| Exemple 7 | 56.2 | 51.0 | 51.5 |
| Exemple comparatif 6 | 12.8 | 12.4 | 11.9 |

D'après le tableau 11, dans les modes de réalisation des exemples 5 et 7, on a pu percevoir les caractères écrits sur le papier d'une manière exacte et complète. Ceci est dû au fait que la différence de couleur $\Delta E^*_{ab}$(p-b) entre la zone d'aplat 13 et la la zone d'aplat écrite par stylo est supérieure à 50. Par contre, dans un mode de réalisation de l'exemple comparatif 6, la différence de couleur $\Delta^*_{ab}$(p-b) était petite et environ 12. Dans cet exemple comparatif 6, étant donné que la marque de détection 14 fait obstacle à la perception visuelle, il a été difficile de percevoir les caractères avec précision.

On a également fait le test d'écriture de 1000m sur le support d'écriture selon les exemples 5 et 7 ainsi que l'exemple comparatif 6, en utilisant un stylo à bille noir commercialisé (Super Grippe 0.5mm de la société Pilote), pour examiner si le stylo écrit bien ou non après cette écriture de 1000m. Plus précisément, on a utlisé 4 stylos de cette sorte pour faire l'écriture afin d'examiner combien de stylos ont les performances d'écriture déteriorées après 1000m d'écriture. Le tableau 12 représente ce résultat.

Tableau 12

| | Nombre de stylo qui n'écrit pas bien parmi 4 stylos |
|---|---|
| Exemple 5 | 3 stylos |

Suite de tableau

|  | Nombre de stylo qui n'écrit pas bien parmi 4 stylos |
|---|---|
| Exemple 7 | 0 stylo |
| Exemple comparatif 6 | 2 stylos |

D'après ce résultat, dans un mode de réalisation de l'exemple 7 qui contient un colorant, le stylo écrit bien après 1000m d'écriture. Par contre, dans les modes de réalisation de l'exemple 5 et de l'exemple comparatif 6, respectivement 3 stylos ou 2 stylos ont les performances d'écriture affectées après 1000m d'écriture. Ceci est dû au fait que dans le cas où la marque de détection 14 serait composée de l'encre contenant un pigment, ce pigment bouche la pointe du stylo lors de l'écriture par le stylo à bille. Etant donné que le stylo à bille est un article à écrire utilisé le plus fréquent, il est très avantageux et utile de conférer une capacité d'absorption de l'infrarouge au colorant, car la pointe du stylo à bille ne risque pas de se boucher.

**Revendications**

1. Support d'écriture utilisé dans une unité de saisie des informations manuscrites qui peut convertir les formes ou figures manuscrites en informations numériques,
dans lequel ledit support d'écriture comprend un substrat sous forme de feuilles, des points sous forme définie qui sont imprimés sur la surface dudit substrat, et une marque de détection composée desdits points qui sont arrangés selon une loi particulière,
dans lequel lesdits points contiennent un colorant ou un pigment qui absorbe le rayonnement infrarouge,
dans lequel la différence de couleur entre les points sur ladite surface du substrat et la zone non-imprimée où les points ne sont pas imprimés sur ladite surface du substrat, est exprimée par la relation suivante:

$$\Delta E^*_{ab}(p-p) = \sqrt{(\Delta L^*(p-p))^2 + (\Delta a^*(p-p))^2 + (\Delta b^*(p-p))^2} \cdots (1)$$

$\Delta E^*_{ab}(p-p)$ étant une différence de couleur entre les points et la zone non-imprimée,
$\Delta L^*_{ab}(p-p)$ étant une différence de luminance $L^*$ entre les points et la zone non-imprimée,
$\Delta a^*_{ab}(p-p)$ étant une différence de chromaticité $a^*$ entre les points et la zone non-imprimée,
et $\Delta b^*_{ab}(p-p)$ étant une différence de chromaticité $b^*$ entre les points et la zone non-imprimée,
et dans lequel la différence de couleur $\Delta E^*_{ab}(p-p)$ calculée est inférieure ou égale à 60 lorsque la lumière visible de 380 à 780nm est irradiée sur la surface dudit support d'écriture.

2. Support d'écriture selon la revendication 1, dans lequel ladite différence de couleur $\Delta E^*_{ab}(p-p)$ est inférieure ou égale à 40.

3. Support d'écriture selon la revendication 2, dans lequel ladite différence de couleur $\Delta E^*_{ab}(p-p)$ est inférieure ou égale à 10 à 20.

4. Support d'écriture selon l'une des revendications 1 à 3, dans lequel un signal contraste d'impression (PCS) entre lesdits points et ladite zone non-imprimée est défini par la relation suivante:

PCS=(taux de réflexion de la zone non-imprimée − taux de réflexion des points)/(taux de réflexion de la zone non-imprimée)

et dans lequel le PCS calculé est compris dans la plage entre 0.5 à 1 lorsque le proche infrarouge de 800 à 1000nm est irradiée sur la surface dudit support d'écriture.

5. Support d'écriture selon l'une des revendications 1 à 4, dans lequel ledit colorant ou pigment qui absorbe le rayonnement infrarouge est choisi dans un groupe constitué de colorants ou pigments phtalo, cyanine, phtalo-cyanine, et naphtalo-cyanine.

**6.** Support d'écriture selon l'une des revendications 1 à 5, dans lequel lesdits points sont imprimés à l'encre contenant une résine dont la teneur en colorant ou pigment qui absorbe le rayonnement infrarouge est comprise entre 0.1 et 10% en poids.

**7.** Support d'écriture selon l'une des revendications 1 à 6, dans lequel ledit substrat est un papier qualité, un papier recyclé, ou un film de haut poids moléculaire.

**8.** Système de saisie des informations manuscrites comportant une unité de saisie des informations manuscrites qui peut convertir les formes ou figures manuscrites en informations numériques, un support d'enregistrement qui met en mémoire lesdites informations numériques, et un support d'écriture utilisé par ladite unité de saisie,
dans lequel ledit support comprend un substrat sous forme de feuille,
des points sous forme définie qui sont imprimés sur la surface dudit substrat, et une marque de détection composée desdits points qui sont arrangés selon une loi particulière,
dans lequel lesdits points sont imprimés à l'encre contenant un colorant ou pigment qui absorbe le rayonnement infrarouge,
dans lequel la différence de couleur entre les points et ladite surface du substrat est exprimée par la relation suivante:

$$\Delta E^*_{ab}(p-p) = \sqrt{(\Delta L^*(p-p))^2 + (\Delta a^*(p-p))^2 + (\Delta b^*(p-p))^2} \cdots (1)$$

$\Delta E^*_{ab}(p-p)$ étant une différence de couleur entre les points et la zone non-imprimée,
$\Delta L^*_{ab}$ (p-p) étant une différence de luminance $L^*$ entre les points et la zone non-imprimée,
$\Delta a^*_{ab}$ (p-p) étant une différence de chromaticité $a^*$ entre les points et la zone non-imprimée,
$\Delta b^*_{ab}$ (p-p) étant une différence de chromaticité $b^*$ entre les points et la zone non-imprimée,
dans lequel la différence de couleur $\Delta E^*_{ab}(p-p)$ calculée est inférieure ou égale à 60 lorsque la lumière visible de 380 à 780nm est irradiée sur la surface dudit support d'écriture,
et dans lequel ladite unité de saisie d'informations manuscrites est dotée d'un moyen d'enregistrement des prises de vue, sous forme d'image, d'une partie de la marque de détection dudit support d'écriture, d'un moyen d'analyse qui permet d'établir les données d'analyse en analysant une partie de ladite marque de détection, et d'un moyen de transfert qui transmet les données d'analyse au support d'enregistrement.

**9.** Système de saisie des informations manuscrites selon la revendication 8, dans lequel un signal contraste d'impression (PCS) entre lesdits points et la zone non-imprimée dudit support d'écriture est exprimé par la relation suivante :

PCS=(taux de réflexion de la zone non-imprimée − taux de réflexion des points)/(taux de refléxion de la zone non-imprimée)···(2)

et dans lequel le PCS calculé est compris dans la plage entre 0.5 à 1 lorsque le proche infrarouge de 800 à 1000nm est irradiée sur la surface dudit support d'écriture.

Fig. 1

Fig. 2

Fig. 3

<table>
<tr><td colspan="2" align="center">**INTERNATIONAL SEARCH REPORT**</td><td>International application No.<br>PCT/JP2004/009261</td></tr>
</table>

**A. CLASSIFICATION OF SUBJECT MATTER**
Int.Cl⁷ B42D15/00, G06F3/03

According to International Patent Classification (IPC) or to both national classification and IPC

**B. FIELDS SEARCHED**

Minimum documentation searched (classification system followed by classification symbols)
Int.Cl⁷ B42D1/00-15/00, G06F3/03

Documentation searched other than minimum documentation to the extent that such documents are included in the fields searched
Jitsuyo Shinan Koho       1922-1996   Toroku Jitsuyo Shinan Koho   1994-2004
Kokai Jitsuyo Shinan Koho  1971-2004   Jitsuyo Shinan Toroku Koho   1996-2004

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2003-500777 A (Anoto AB.),<br>07 January, 2003 (07.01.03),<br>Full text; all drawings<br>& EP 1188142 A1          & SE 9901953 A<br>& US 6502756 B1        & WO 2000/073981 A1 | 1-9 |
| A | JP 5-80010 B2 (International Business<br>Machines Corp.),<br>05 November, 1993 (05.11.93),<br>Full text; all drawings<br>& EP 407734 A1          & US 5051736 A1 | 1-9 |
| A | US 5477012 A (Oral F. Sekendur),<br>19 December, 1995 (19.12.95),<br>Full text; all drawings<br>& EP 892971 A1          & US 5477012 A<br>& WO 1997/022959 A1 | 1-9 |

☒ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>22 September, 2004 (22.09.04) | Date of mailing of the international search report<br>12 October, 2004 (12.10.04) |
|---|---|
| Name and mailing address of the ISA/<br>Japanese Patent Office | Authorized officer |
| Facsimile No. | Telephone No. |

Form PCT/ISA/210 (second sheet) (January 2004)

**INTERNATIONAL SEARCH REPORT**

| International application No. |
|---|
| PCT/JP2004/009261 |

C (Continuation). DOCUMENTS CONSIDERED TO BE RELEVANT

| Category* | Citation of document, with indication, where appropriate, of the relevant passages | Relevant to claim No. |
|---|---|---|
| E,X | JP 2003-256122 A (Kokuyo Co., Ltd.), 10 September, 2003 (10.09.03), Full text; all drawings (Family: none) | 1-9 |

Form PCT/ISA/210 (continuation of second sheet) (January 2004)